# EUROPÄISCHE PATENTSCHRIFT

(11) **EP 1 135 281 B1**
(45) Veröffentlichungstag und Bekanntmachung des Hinweises auf die Patenterteilung: **08.01.2003**
(21) Anmeldenummer: 99941403.0
(22) Anmeldetag: 29.06.1999
(51) Int. Cl.: B60R 21/26, B60R 21/32

(54) **ZÜNDVORRICHTUNG FÜR RÜCKHALTEMITTEL IN EINEM FAHRZEUG**
IGNITION DEVICE FOR RESTRAINT MEANS IN A VEHICLE
DISPOSITIF D'ALLUMAGE POUR SYSTEME DE RETENUE DE VEHICULE

(30) Priorität: 07.12.1998 DE 19856325
(43) Veröffentlichungstag der Anmeldung: 26.09.2001
(73) Patentinhaber: ROBERT BOSCH GMBH, 70442 Stuttgart (DE)
(72) Erfinder: JAKOB, Gert, D-70378 Stuttgart (DE); NITSCHKE, Werner, D-71254 Ditzingen (DE); HAUSER, Ralf, D-71254 Ditzingen (DE); ZYWIETZ, Martin, D-71642 Ludwigsburg (DE)
(86) Internationale Anmeldenummer: DE9901885
(87) Internationale Veröffentlichungsnummer: WO00034084

(56) Entgegenhaltungen:
- EP-A- 0 802 092
- DE-A- 19 609 908
- US-A- 5 639 986

## Beschreibung

### Stand der Technik

Die vorliegende Erfindung betrifft eine Zündvorrichtung für Rückhaltemittel in einem Fahrzeug, wobei mindestens ein von einer leitenden Kapsel umgebenes Zündelement und Schaltungsmittel - vorzugsweise zur Energieversorgung, zur Ansteuerung und/oder Diagnose des Zündelements - in einem gemeinsamen Modul-Gehäuse untergebracht sind und das Modul-Gehäuse mit Anschlußstiften versehen ist, die einerseits mit den Schaltungsmitteln kontaktiert sind und andererseits aus dem Modul-Gehäuse zur Verbindung mit einem Anschlußstecker herausgeführt sind.

Eine derartige Zündvorrichtung ist aus der DE 196 10 799 C1 bekannt. Diese bekannte Zündvorrichtung ist so konzipiert, daß sie gegenüber bisher eingesetzten Zündvorrichtungen möglichst geringe Außenabmessungen aufweist, um beispielsweise auch im Lenkrad eines Fahrzeugs untergebracht werden zu können. Bisher waren nämlich das Zündelement und eine Zündendstufe, welche Schaltungen zur Energieversorgung, zur Ansteuerung und/oder Diagnose des Zündelements enthielt, in getrennten, miteinander über Steckverbinder kontaktierbaren Modulen untergebracht. Gemäß der DE 196 10 799 C1 sind in einem Modul-Gehäuse neben einem die thermische Energie für die Zündung eines Zündgemisches erzeugenden Zündelement auch Schaltungselemente z. B. für die Energieversorgung, die Ansteuerung und/oder Diagnose des Zündelements angeordnet. Unterhalb des Zündelements befindet sich in dem Modul-Gehäuse ein quaderförmiger Körper, in dem Kontaktstifte für das Zündelement integriert sind und auf dessen Seitenwänden Schaltungselemente aufgebracht sind. Der quaderförmige Körper dient sowohl zur Fixierung von Kontaktstiften für das Zündelement als auch von Anschlußstiften, die zur Kontaktierung mit einem Anschlußstecker aus dem Modul-Gehäuse herausgeführt sind.

Bei der Handhabung der Zündvorrichtung vor oder während des Einbaus in ein Kraftfahrzeug kann es zu einer elektrostatischen Aufladung innerhalb des Modul-Gehäuses kommen, wobei eine Durchschlagspannung entstehen kann, die ausreicht, um das Zündelement auszulösen. Ebenso sind elektrostatische Aufladungen in der Zündvorrichtung möglich, wenn es bereits in einem Fahrzeug eingebaut ist.

Die Merkmale des Oberbegriffs des Anspruchs 1 sind aus der im Dokument DE-A-196 09 908 offenbarten Zündvorrichtung bekannt. Diese zeigt ein von einem leitenden Gehäuse umgebenes Zündelement, bei dem eine nach innen gerichtete, ringförmige Annockung am Gehäuse als Elektrostatikschutz dient.
Der Erfindung liegt die Aufgabe zugrunde, diese bekannten Zündvorrichtungen weiter zu verbessern.

### Vorteile der Erfindung

Die genannte Aufgabe wird mit den Merkmalen des Anspruchs 1 gelöst.

Vorteilhafte Weiterbildungen der Erfindung gehen aus den Unteransprüchen hervor.

Danach ist der leitende Körper auf einem die Anschlußstifte fixierenden Sockel aufgesetzt. Die Kontaktierung des leitenden Körpers mit der Zünd-Kapsel kann entweder dadurch erfolgen, daß der leitende Körper eine Aussparung zur Aufnahme der Zünd-Kapsel aufweist oder daß die Zündkapsel mit einer Manschette versehen ist, die über den leitenden Körper stülpbar ist. Dabei kann der leitende Körper ein auf dem Substrat aufliegender Metallring mit abgewinkeltem Kragen sein, über den die Manschette der Zünd-Kapsel stülpbar ist.

Die Schaltungsmittel sind auf dem Substrat angeordnet, wobei ein auf dem Substrat aufliegendes Federelement eine elektrische Verbindung zwischen den Schaltungsmitteln auf dem Substrat und Kontaktstiften des Zündelements herstellt.

### Zeichnung

Anhand mehrerer in der Zeichnung dargestellter Ausführungsbeispiele wird nachfolgend die Erfindung näher erläutert. Es zeigen:
Figur 1 einen Längsschnitt durch eine Zündvorrichtung einer ersten Ausführungsart,
Figur 1a einen Querschnitt A-A und
Figur 1b einen Querschnitt B-B durch diese Zündvorrichtung,
Figur 2 einen Längsschnitt durch eine Zündvorrichtung einer zweiten Ausführungsart und
Figur 3 einen Längsschnitt durch eine Zündvorrichtung einer dritten Ausführungsart.

### Beschreibung von Ausführungsbeispielen

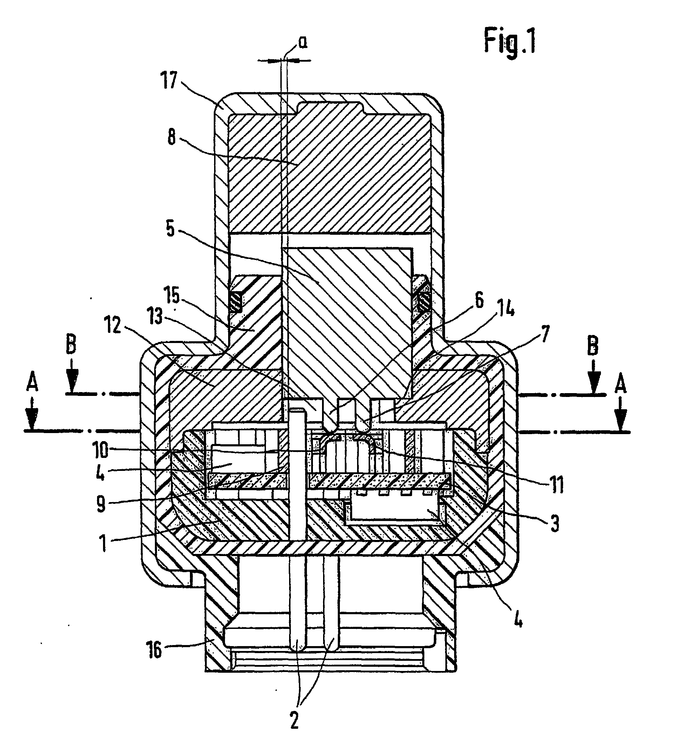

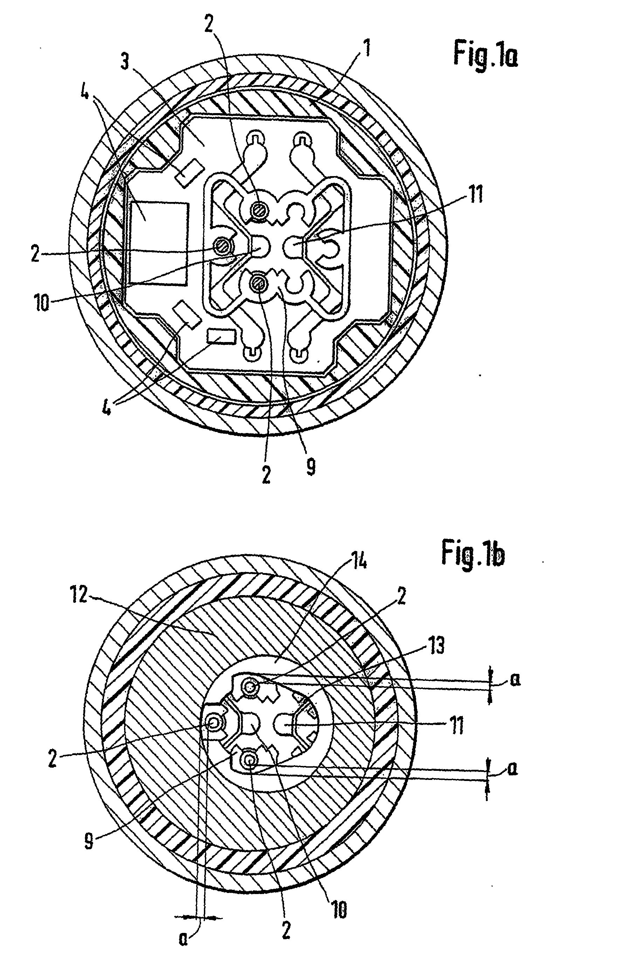

Die in Figur 1 als Längsschnitt dargestellte Zündvorrichtung ist folgendermaßen aufgebaut:
Im unteren Teil befindet sich ein Sockel 1, in dem mehrere Anschlußstifte 2 fixiert sind. Der Sockel 1 besteht entweder aus einem Kunststoff oder aus einem Metall. In einem Metall-Sockel 1 müssen die Anschlußstifte 2 isoliert, z. B. mittels einer Glasschmelze, fixiert sein. Die Anschlußstifte 2 ragen einerseits in das Innere des Modul-Gehäuses der Zündvorrichtung hinein und andererseits zum Anschluß beispielsweise an einen Bus-Stecker aus dem Modul-Gehäuse heraus. Über die Anschlußstifte 2 werden der Zündvorrichtung z. B. Auslösesignale oder andere Daten von einer an eine Busleitung angeschlossenen zentralen Steuereinheit übertragen.

Der Sockel 1 dient als Halterung für ein Substrat 3, auf dessen Ober- und/oder Unterseite mehrere Schaltungselemente 4 angeordnet sind. Diese Schaltungselemente 4 sind z. B. SMD-Bauteile oder ASICs in Flip-Chip-Technik. Bei den Schaltungselementen 4 handelt es sich vorzugsweise um Energieversorgungsschaltungen oder Schaltungen zur Ansteuerung und/oder Diagnose eines in dem Modulgehäuse befindlichen Zündelements, von dem in der Figur 1 die es umschließende Kapsel 5 und die daraus herausgeführten Kontaktstifte 6 und 7 zu sehen sind. Das Zündelement selbst soll hier nicht näher beschrieben werden, da es gemäß dem Stand der Technik (z. B. DE 196 10 799 C1) ausgeführt sein kann. Im einfachsten Fall ist es ein Widerstandsdraht, dem über die Kontaktstifte 6 und 7 ein Strom zuführbar ist. Innerhalb der Zünd-Kapsel 5 befindet sich eine Zündladung, die bei Stromfluß über die Kontaktstifte 6 und 7 gezündet wird. In dem dargestellten Ausführungsbeispiel ist oberhalb der Zünd-Kapsel 5 eine weitere gekapselte Zündladung 8 angeordnet. Diese weitere Zündladung 8 ist dann erforderlich, wenn die Zündvorrichtung z. B. in einem Gurtstaffer eingesetzt werden soll. Ansonsten reicht aber auch die eine in der Zünd-Kapsel 5 vorhandene Zündladung aus.

Eine elektrische Verbindung zwischen den Kontaktstiften 6 und 7 des Zündelementes 5 und den Schaltungselementen 4 auf dem Substrat 3 erfolgt über ein Federelement 9, das auf dem Substrat 3 aufliegt, dort mit Leiterbahnen kontaktiert ist und elastische Kontaktzungen 10 und 11 aufweist, welche die Kontaktstifte 6 und 7 des Zündelements 5 berühren. Ein in der Figur 1a dargestellter Querschnitt A-A verdeutlicht die Ausgestaltung des Federelements 9. Das Federelement 9 besteht aus einem isolierenden Kunststoffrahmen, der die durch das Substrat 3 hindurchragenden und mit Leiterbahnen auf dem Substrat 3 kontaktierten Anschlußstifte 2 klammerartig umgreift und dadurch in einer festen Position gehalten wird. In den Kunststoffrahmen des Federelements 9 sind die Kontaktzungen 10 und 11 eingehängt, wobei sie einen solch großen Abstand gegenüber den Anschlußstiften 2 aufweisen, daß es bei einer elektrostatischen Aufladung der Zündvorrichtung nicht zu einem Spannungsüberschlag zwischen den Anschlußstiften 2 und den Kontaktzungen 10 und 11 kommen kann.

Wie die Figur 1 zeigt, liegt auf dem Rand des Sockels 1 im Inneren des Modul-Gehäuses ein leitender Körper 12 auf. Dieser leitende Körper 12 dient als Halter für die Zünd-Kapsel 5. Der leitende Körper 12 ist mit der Zünd-Kapsel 5 elektrisch leitend kontaktiert und weist eine Öffnung 13 auf, durch die sich die Kontaktstifte 6 und 7 des Zündelements 5 bis zu den Kontaktzungen 10 und 11 des Federelements 9 erstrecken. Der in der Figur 1b dargestellte Querschnitt B-B verdeutlicht, daß sich um die Öffnung 13, durch welche in der Figur 1b das Federelement 9 sichtbar ist, ein Rand 14 des leitenden Körpers 12 erstreckt, auf dem die Zünd-Kapsel 5 aufliegt. Durch Löten, Schweißen, Kleben oder Einpressen kann die Zünd-Kapsel 5 in dem leitenden Körper 12 fixiert werden.

Der Figur 1 ist zu entnehmen, daß die Zünd-Kapsel 5, der leitende Körper 12 und der Sockel 1 von einer Kunststoffumspritzung 15 umschlossen sind. Schließlich befindet sich unterhalb des Sockels 1 noch eine Steckerbuchse 16. Ein Mantel 17 (z. B. aus Aluminium) umschließt die Steckerbuchse 16, die Kunststoffumspritzung 15 und die weitere Zündladung 8, so daß insgesamt ein geschlossenes Modul-Gehäuse entsteht.

Bei der Montage der Zündvorrichtung in ein Fahrzeug kann es zu einer elektrostatischen Aufladung der Zündvorrichtung kommen, aufgrund derer eventuell so hohe Ströme über die Kontaktstifte 6 und 7 durch das Zündelement fließen, daß es zu einer unerwünschten Zündung kommt. Um solche ungewollten Zündungen auszuschließen, sind in der Zündvorrichtung Mittel vorgesehen, die es verhindern, daß elektrostatische Ladungen über die Kontaktstifte 6 und 7 durch das Zündelement abfließen und dieses unter Umständen auslösen. Diese Mittel bestehen aus dem leitenden Körper 12, demgegenüber die Anschlußstifte 2, über welche elektrostatische Ladungen von außen her in die Zündvorrichtung einfließen können, einen definierten Abstand a (vgl. Figur 1, 1b) aufweisen. Die Anschlußstifte 2, welche in die Öffnung 13 des leitenden Körpers 12 hineinragen und dabei den Abstand a gegenüber dem leitenden Körper 12 einhalten, bilden zusammen mit dem leitenden Körper 12 eine Funkenstrecke, über welche sich durch einen Spannungsüberschlag eine elektrostatische Ladung abbauen kann, ohne daß dabei ein Strom über das Zündelement 5 fließt. Der Abstand a zwischen den Anschlußstiften 2 und dem leitenden Körper 12 ist gerade so gewählt, daß es bei Spannungen, welche zu einer ungewollten Zündung führen könnten, zu einem Überschlag kommt. Der beschriebene elektrisch leitende Körper 12 hat also nicht nur die Funktion einer Halterung für das Zündelement 5, sondern dient auch als Ladungsableiter, um das Zündelement 5 vor ungewollten Zündungen zu schützen.

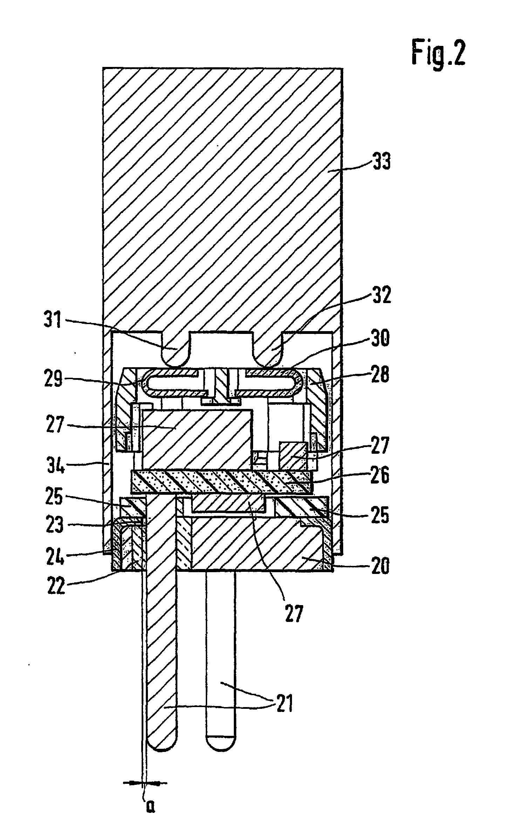

Eine zweite Ausführungsform einer Zündvorrichtung zeigt die Figur 2. Diese weist wiederum einen Sockel 20 auf, in dem Anschlußstifte 21 fixiert sind. Der Sockel 20 ist in diesem Fall ein Metall-Sockel, in dem die Anschlußstifte 21 in Bohrungen mittels einer Glasschmelze 22 isolierend fixiert sind. Auf dem Sockel 20 liegt ein Metallring 23 auf, der einen über den Rand des Sockels 20 nach unten abgewinkelten Kragen 24 aufweist. Zwischen dem Metall-Sockel 20 und einem mit den Anschlußstiften 21 durch Löten oder Kleben fixierten Substrat 26 ist ein Isolierkörper 25 eingefügt. Die Oberund Unterseite des Substrats 26 sind mit Schaltungselementen 27 bestückt. Ein auf das Substrat 26 aufgesetztes Federelement 28 ist einerseits mit Leiterbahnen auf dem Substrat 26 kontaktiert und weist andererseits Kontaktzungen 29 und 30 auf, welche eine elektrische Verbindung zwischen den Schaltungselementen 27 auf dem Substrat 26 und Kontaktstiften 31 und 32 eines Zündelements herstellen. Das Zündelement ist wie bereits im Zusammenhang mit der Figur 1 beschrieben, in einer Kapsel 33 zusammen mit einer Zündladung untergebracht. Die Zünd-Kapsel 33 ist mit einer über die Kontaktstifte 31 und 33 hinausragenden Manschette 34 versehen, welche über den abgewinkelten Kragen 24 des Metallrings 23 gestülpt werden kann. Die Manschette 34 der Zünd-Kapsel 33 wird an dem Kragen 24 des Metallrings 23 mittels Löten, Schweißen oder Kleben fixiert. Durch die Manschette 34 der Zünd-Kapsel 33 entsteht der notwendige Raum zur Aufnahme der Schaltungselemente 27, und die Zünd-Kapsel 33 bildet gleichzeitig den äußeren Mantel der gesamten Zündvorrichtung.

Der Metallring 23 dient hier, wie schon der leitende Körper 12 beim Ausführungsbeispiel der Figur 1, als Halterung für die Zünd-Kapsel 33 und gleichzeitig zur Ableitung elektrostatischer Ladung. Die Anschlußstifte 21 sind an dem Metallring 23 in einem Abstand a vorbeigeführt, so daß zwischen den Anschlußstiften 21 und dem Metallring 23 eine Funkenstrecke entsteht.

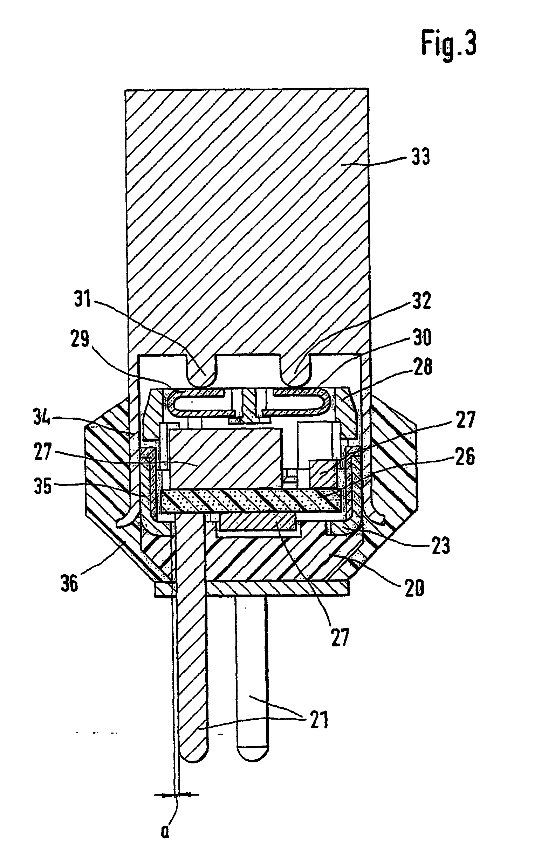

Das in der Figur 3 dargestellte Ausführungsbeispiel einer Zündvorrichtung unterscheidet sich gegenüber dem in der Figur 2 lediglich dadurch, daß der Sockel 20 aus einem isolierenden Kunststoff besteht, weshalb man auf Isoliermittel zwischen dem Sockel 20 und dem Substrat 26 verzichten kann. Außerdem besitzt der Metallring 23 einen nach oben abgewinkelten Kragen 35, über den die Manschette 34 des Zündelements 33 gestülpt ist. Ansonsten hat dieser Metallring 23 die gleiche Funktion als Funkenstrecke wie sie beim Ausführungsbeispiel der Figur 2 bereits beschrieben worden ist. Eine Kunststoffumspritzung 36 umschließt die Manschette 34 der Zündkapsel 33 mit dem Sockel 20.

## Patentansprüche

1. Zündvorrichtung für Rückhaltemittel in einem Fahrzeug, wobei mindestens ein von einer leitenden Kapsel umgebenes Zündelement (5, 33) und Schaltungsmittel (4, 27) - vorzugsweise zur Energieversorgung, zur Ansteuerung und/oder Diagnose des Zündelements - in einem gemeinsamen Modul-Gehäuse untergebracht sind und das Modul-Gehäuse mit Anschlußstiften (2, 21) versehen ist, die einerseits mit den Schaltungsmitteln (4, 27) kontaktiert und andererseits aus dem Modul-Gehäuse zur Verbindung mit einem Anschlußstecker herausgeführt sind, wobei mindestens ein leitender, mit der Zünd-Kapsel (5, 33) kontaktierter Körper (12, 23) vorhanden ist, der zu den einzelnen Anschlußstiften (2, 21) einen solchen definierten Abstand (a) aufweist, daß es bei einer elektrostatischen Aufladung zwischen den Anschlußstiften (2, 21) und dem leitenden Körper (12, 23) zu einem Spannungsüberschlag kommt, **dadurch gekennzeichnet, dass** die Schaltungsmittel (4, 27) auf einem Substrat (3, 26) angeordnet sind, und daß ein auf dem Substrat (3, 26) aufliegendes Federelement (9, 28) eine elektrische Verbindung zwischen den Schaltungsmitteln (4, 27) auf dem Substrat (3, 26) und Kontaktstiften (6, 7, 31, 32) des Zündelements herstellt.

2. Vorrichtung nach Anspruch 1, **dadurch gekennzeichnet, daß** der leitende Körper (12) auf einem die Anschlußstifte (2, 21) fixierenden Sockel (1, 20) aufgesetzt ist, und daß der leitende Körper (12) eine Aussparung (13, 14) zur Aufnahme der Zünd-Kapsel (5) aufweist.

3. Zündvorrichtung nach Anspruch 1, **dadurch gekennzeichnet, daß** der leitende Körper (23) auf einem die Anschlußstifte (21) fixierenden Sockel (20) aufgesetzt ist und daß die Zünd-Kapsel (33) mit einer Manschette (34) versehen ist, die über den leitenden Körper (23) stülpbar ist.

4. Zündvorrichtung nach Anspruch 3, **dadurch gekennzeichnet, daß** der leitende Körper ein auf dem Sockel (20) aufliegender Metallring (23) mit einem abgewinkelten Kragen (24, 35) ist, über den die Manschette (34) der Zünd-Kapsel (33) stülpbar ist.

## Claims

1. Ignition device for restraint means in a vehicle, at least one ignition element (5, 33), which is surrounded by a conductive capsule, and switching means (4, 27) - preferably for the power supply, for the activation and/or the diagnosis of the ignition element - being accommodated in a common module housing and the module housing being provided with connection pins (2, 21) which make contact at one end with the switching means (4, 27) and at the other end are led out of the module housing for connection to a connector plug, there being at least one conductive body (12, 23) which makes contact with the ignition capsule (5, 33) which is at such a defined spacing (a) from the individual connection pins (2, 21) that when there is an electrostatic charge between the connection pins (2, 21) and the conductive body (12, 23) a voltage flashover occurs, **characterized in that** the switching means (4, 27) are arranged on a substrate (3, 26), and **in that** a spring element (9, 28) resting on the substrate (3, 26) produces an electric connection between the switching means (4, 27) on the substrate (3, 26) and contact pins (6, 7, 31, 32) of the ignition element.

2. Device according to Claim 1, **characterized in that** the conductive body (12) is placed on a base (1, 20) securing the connection pins (2, 21), and **in that** the conductive body (12) has a cutout (13, 14) for receiving the ignition capsule (5).

3. Ignition device according to Claim 1, **characterized in that** the conductive body (23) is placed on a base (20) securing the connection pins (21), and **in that** the ignition capsule (33) is provided with a sleeve (34) which can be pulled over the conductive body (23).

4. Ignition device according to Claim 3, **characterized in that** the conductive body is a metal ring (23) which rests on the base (20) and has an angled collar (24, 35) over which the sleeve (34) of the ignition capsule (33) can be pulled.

## Revendications

1. Dispositif d'allumage pour système de retenue dans un véhicule, dans lequel :
- au moins un élément d'allumage (5, 23) entouré par une capsule conductrice et des moyens de circuit (4, 27) servant de préférence à l'alimentation en énergie, à la commande et/ou au diagnostic de l'élément d'allumage, sont montés dans un boîtier de module commun équipé de broches de connexion (2, 21) qui d'une part sont en contact avec les moyens de circuit (4, 27) et d'autre part sortent du boîtier de module pour être en liaison avec une prise de connexion,
- il existe au moins un corps conducteur (12, 23) en contact avec la capsule d'allumage (5, 33) et qui est espacé des broches de connexion (2, 21) d'une distance (a) définie de manière qu'il se produise une décharge quand entre les broches (2, 21) et le corps conducteur (12, 23) apparaît une charge électrostatique.
**caractérisé en ce que**
les moyens de circuit (4, 27) sont disposés sur un substrat (3, 26) et un élément élastique (9, 28) reposant également sur le substrat (3, 26) établit une liaison électrique entre les moyens de circuit (4, 27) et les broches de contact (6, 7, 31, 32) de l'élément d'allumage.

2. Dispositif d'allumage selon la revendication 1,
**caractérisé en ce que**
le corps conducteur (12) est placé sur un socle (1, 20) fixant les broches de connexion (2, 21) et il présente un évidement (13, 14) pour accueillir la capsule d'allumage (5).

3. Dispositif d'allumage selon la revendication 1,
**caractérisé en ce que**
le corps conducteur (23) est placé sur un socle (20) fixant les broches de connexion (21) et la capsule d'allumage (33) est équipée d'une manchette (34) enfoncée sur le corps conducteur (23).

4. Dispositif d'allumage selon la revendication 3,
**caractérisé en ce que**
le corps conducteur est une bague métallique (23) reposant sur le socle (20) et présentant un col coudé (24, 35) sur lequel peut être enfoncée la manchette (34) de la capsule d'allumage (33).
